# EUROPÄISCHE PATENTSCHRIFT

(11) **EP 4 444 562 B1**
(45) Veröffentlichungstag und Bekanntmachung des Hinweises auf die Patenterteilung: **22.10.2025**
(21) Anmeldenummer: 22707145.3
(22) Anmeldetag: 22.02.2022
(51) Int. Cl.: B60K 11/02, F16K 11/00, F01P 11/04, B60K 1/00, B60K 15/03

(54) **KÜHLMITTELTANK MIT AUSSENLIEGENDEN KOMPONENTENSCHNITTSTELLEN UND AUSSENLIEGENDEN KANÄLEN ZUR KÜHLMITTELFÜHRUNG**
COOLANT TANK WITH COMPONENT INTERFACES ARRANGED ON ITS EXTERIOR AND CHANNELS FOR GUIDING THE COOLANT ARRANGED ON ITS EXTERIOR
RÉSERVOIR DE FLUIDE DE REFROIDISSMENT AVEC DES INTERFACES DE COMPOSANTS ARRANGÉES SUR SON EXTÉRIEUR ET AVEC DES CONDUITS POUR LE GUIDAGE DE FLUIDE DE REFROIDISSEMENT ARRANGÉS SUR SON EXTÉRIEUR

(30) Priorität: 06.12.2021 DE 102021132065
(43) Veröffentlichungstag der Anmeldung: 16.10.2024
(73) Patentinhaber: HELLA GmbH & Co. KGaA, 59552 Lippstadt (DE)
(72) Erfinder: NIESS, Dominik, 59555 Lippstadt (DE); BEWERMEYER, Frank, 33142 Büren (DE); TIEMEYER, Sebastian, 44143 Dortmund (DE)
(74) Vertreter: Behr-Wenning, Gregor
(86) Internationale Anmeldenummer: PCT/EP2022/054386
(87) Internationale Veröffentlichungsnummer: WO 2023/104348

(56) Entgegenhaltungen:
- EP-A1- 3 909 798
- WO-A1-2021/122056
- DE-A1- 2 844 494
- DE-B3- 102015 000 424
- KR-A- 20090 109 856

## Beschreibung

Hier wird ein Kühlmitteltank mit außenliegenden Komponentenschnittstellen und außenliegenden Kanälen zur Kühlmittelführung beschrieben.

Kraftfahrzeuge mit elektrischen Antrieben weisen gegenüber Fahrzeugen mit Verbrennungsmotoren den Nachteil auf, dass eine Verteilung der durch den Motor erzeugten Wärme komplexere Anforderungen an ein Kühlsystem der Kraftfahrzeuge stellt. Während bei einem Verbrennungsmotor lediglich die Motorwärme durch einen Kühlmittelkreislauf abgeführt werden muss, welches auch im Falle einer zusätzlichen Nutzung der Motorwärme zur Innenraumbeheizung des Fahrzeugs nur einen Kühlmittelkreislauf erfordert, benötigen elektrisch betriebene Fahrzeuge meist mehrere, voneinander getrennte Kühlmittelkreisläufe. Einerseits muss überschüssige Motorenwärme abgeführt werden, andererseits müssen eine Fahrzeugbatterie und der Fahrzeuginnenraum, je nach Umgebungstemperatur des Fahrzeugs, entweder gekühlt oder erwärmt werden, um eine optimale Funktion des elektrisch betriebenen Kraftfahrzeugs sicher zu stellen. Weiter muss die Fahrzeugbatterie, zum Beispiel im Falle niedriger Umgebungstemperaturen, auch dann beheizt werden, wenn keine überschüssige Motorenwärme abgeführt werden muss oder wenn das Fahrzeug zwar in Betrieb genommen wurde, ein Motor des Fahrzeugs aber keine oder zumindest noch keine nennenswerte Abwärme produziert. Neben einer Kühlvorrichtung für das Kühlmittel eines Kühlmittelkreislaufs ist daher in der Regel auch eine Erwärmungsvorrichtung notwendig, die im Bedarfsfall eine Kühlmitteltemperatur erhöht.

Um die Motortemperatur, die Batterietemperatur sowie die Innenraumtemperatur eines Kraftfahrzeugs effizient regeln zu können sind daher, anders als bei Fahrzeugen mit Verbrennungsmotoren, meist mehrere voneinander separate Kühlmittelkreisläufe nötig. Diese Kühlmittelkreisläufe müssen durch Kühlmittelführungssysteme für multiple Kühlmittelkreisläufe gespeist und geregelt werden.

Ein Beispiel für die Speisung und Regelung mehrerer Kühlmittelkreisläufe für ein Elektrofahrzeug wird zum Beispiel durch das Dokument WO 2017 / 223 232 A2 offenbart. Das Dokument zeigt einen Kühlmitteltank, zum Beispiel für ein Elektrofahrzeug, der mehrere in seinem Inneren angeordnete Komponenten zur Herstellung multipler Kühlmittelkreisläufe aufweist. Die Positionierung der Komponenten, zum Beispiel der Leitungen für die einzelnen Kühlmittelkreisläufe, im Inneren des Tanks selbst ist raumeffizient, jedoch im Falle einer Beschädigung oder notwendigen Wartung dieser Komponenten mit einem erheblichen Mehraufwand für deren Zugänglichmachung verbunden. Weiter wird durch die Verlagerung der Vorrichtungskomponenten ins Innere des Kühlmitteltanks eine multiple Wärmebrücke zwischen allen Komponenten der mehreren Kühlmittelkreisläufe geschaffen, sodass diese sämtlich miteinander Wechselwirken und ein Regelungsaufwand für die Kühlmittelkreisläufe erhöht wird. Zudem wird das Fassungsvolumen durch jede ins Innere des Tanks verlagerte Vorrichtungskomponente reduziert, sodass der Tank zur Erhaltung eines bestimmten Kühlmittelfassungsvolumens vergrößert werden muss. Zudem ist ein Tank mit innenliegenden Vorrichtungskomponenten erheblich schwieriger zu fertigen, als ein Tank der lediglich zur Aufnahme und Bevorratung von Kühlmittel eingerichtet ist.

Ein weiteres Beispiel für einen Kühlmitteltank zur Speisung mehrerer Kühlmittelkanäle wird durch das Dokument EP 3 909 798 A1 offenbart. Das Dokument EP 3 909 798 A1 wird außerdem als nächstliegender Stand der Technik angesehen.

Das Dokument zusätzlich zitierte Dokument DE 28 44 494 A1 offenbart einen Bremsflüssigkeitsbehälter für ein Kraftfahrzeug mit mehreren angeformten Auslässen und durch verschiedene Wandungselemente gemeinsam ausgebildeten Leitungselementen.

Weiter offenbart das Dokument WO2021/122056 A1 ein Ventilsystem zur Steuerung von Fluidkreisläufen. Das offenbarte Ventilsystem umfasst verschiedene mehrstufige Ventile, wobei allen Ventilen gemeinsam ist, dass sie jeweils zueinander bewegliche Ventilabschnitte aufweisen.

Ferner offenbart das Dokument DE 10 2015 000 424 B3 ein mehrstufiges Ventil mit zueinander unbeweglichen Ventilabschnitten, welches mit verschiedenen Fluidleitungen gekoppelt werden kann.

Es besteht somit die technische Aufgabe, ein Kühlmittelführungssystem für ein Kraftfahrzeug mit mehreren Kühlmittelkreisläufen bereitzustellen, dass die genannten Nachteile überwindet und dennoch besonders raumeffizient angeordnet und gegenüber bekannten Lösungen vereinfacht gefertigt werden kann.

Diese Aufgabe wird durch eine Vorrichtung nach dem Anspruch 1 gelöst. Ausgestaltungen dieser Lösung werden durch die auf diesen Anspruch zurückbezogenen Ansprüche definiert.

Ein Kühlmittelführungssystem für ein Kraftfahrzeug mit mehreren Kühlmittelkreisläufen hat einen Kühlmitteltank mit einem Innenraum, der dazu eingerichtet ist, ein Kühlmittel zu bevorraten. An diesem Kühlmitteltank sind mehrere Kühlmittelkanäle angeordnet, welche dazu eingerichtet sind, das Kühlmittel aus dem Kühlmitteltank in zumindest zwei, insbesondere voneinander getrennte oder separierte, Kühlmittelkreisläufe einzuleiten und/oder das Kühlmittel aus den zumindest zwei Kühlmittelkreisläufen wieder in den Kühlmitteltank einzuleiten.

Die Kühlmittelkanäle sind keine Schläuche, sondern starre oder unelastische Kühlmittelführungen. Die Kühlmittelkanäle können insbesondere gemeinsam mit dem Kühlmitteltank, zum Beispiel durch ein Spritzgussverfahren, gefertigt sein und/oder ein Fertigungsmaterial aufweisen, das einem Fertigungsmaterial des Kühlmitteltanks gleicht. Die Kühlmittelkanäle können insbesondere integrale Bestandteile des Kühlmittelführungssystems sein und gemeinsam mit diesem bereitgestellt werden und/oder an dem Kühlmitteltank angeformt sein, sodass zumindest der Kühlmitteltank und die Kühlmittelkanäle gemeinsam in einem Kraftfahrzeug angeordnet und/oder in einem Kraftfahrzeug eingebaut werden können, ohne dass die Kühlmittelkanäle hierfür in einem gesonderten Arbeitsschritt mit dem Kraftfahrzeugtank verbunden werden müssten.

Zumindest einer der Kühlmittelkanäle ist durch eine Kanalwandung ausgebildet, welche zumindest teilweise an einer Außenwandung des Kühlmitteltanks angeordnet und dazu eingerichtet ist, das Kühlmittel zumindest abschnittsweise einer Kontur der Außenwandung des Kühlmitteltanks folgend zu leiten. In einer Variante kann die Kanalwandung des zumindest einen Kühlmittelkanals hierbei an der Außenwandung des Kühlmitteltanks anliegen. In anderen Ausführungsformen kann die Kanalwandung des zumindest einen Kühlmittelkanals jedoch auch einen geringen Abstand zur Außenwandung des Kühlmitteltanks aufweisen, zum Beispiel einen Abstand von bis zu 5mm, insbesondere einen Abstand von 1mm bis 5mm.

Vorteile diese Anordnung sind, dass das Kühlmittelführungssystem einerseits mehrere Kühlmittelkreisläufe speisen kann, gleichzeitig jedoch sehr raumeffizient zu realisieren und einfach in einem Kraftfahrzeug zu installieren ist. Die Kühlmittelkanäle sind gut von außen zugänglich und können so leicht auf Beschädigungen überprüft und/oder gewartet werden. Die Vorrichtung kann effizient hergestellt werden und Wärmebrücken zwischen den einzelnen Kühlmittelkreisläufen können zumindest reduziert werden.

In einer Ausführungsform können zumindest ein Teil der Kanalwandung des zumindest einen Kühlmittelkanals und zumindest ein Teil der Außenwandung des Kühlmitteltanks einstückig miteinander ausgebildet sein. Mit anderen Worten kann in einer Ausführungsform die Außenwandung des Kühlmitteltanks gleichzeitig einen Teil einer Kanalwandung für einen Kühlmittelkanal ausbilden.

Ein Vorteil hierbei ist, dass die Raum-, Material-, Fertigungs- und Anordnungseffizienz des Kühlmittelführungssystems maximiert werden können.

Weiter kann der Kühlmitteltank durch zwei aneinander angeordnete Tankkomponenten, welche gemeinsam den Innenraum bis auf Öffnungen für die Kühlmittelkanäle und/oder weitere Öffnungen, zum Beispiel zur Befüllung des Kühlmitteltanks mit Kühlmittel, umschließen, ausgebildet sein. Zum Beispiel können die zwei Tankkomponenten jeweils halbschalenförmige oder halbtankförmige durch ein Spritzgussverfahren, insbesondere durch ein Kunststoffspritzgussverfahren, hergestellte Teile eines Kühlmitteltanks sein.

Optional können die zwei aneinander angeordneten Tankkomponenten im Zusammenwirken weiter zumindest einen Teil eines oder mehrerer Kühlmittelkanäle ausbilden. Zum Beispiel können die Tankkomponenten jeweils halbrohr- oder halbkanalförmige Abschnitte aufweisen, die nach einem Zusammenfügen oder nach einem aneinander Anordnen der Tankkomponenten einen oder mehrere Kühlmittelkanäle ausbilden.

Ein Vorteil hierbei ist, dass die Tankkomponenten, welche zum Beispiel mittels eines Spritzgussverfahrens hergestellt werden können, neben dem Kühlmitteltank auch gleichzeitig einen oder mehrere Kühlmittelkanäle zum Anschluss des Kühlmitteltanks an die Kühlmittelkreisläufe und/oder an eine Kühlmittelverteilerbaugruppe ausbilden können, welche jeweils durch halbrohr- oder halbkanalförmige Abschnitte der Tankkomponenten realisiert werden. Die Raum-, Material-, Fertigungs- und Anordnungseffizienz des Kühlmittelführungssystems können hierdurch weiter verbessert werden.

Weiter kann der Kühlmitteltank so ausgestaltet sein, dass der Innenraum des Kühlmitteltanks leitungsfrei und/oder frei von Ventilen, Pumpen oder Steuerungsvorrichtungen für einen Kühlmittelfluss ist. Mit anderen Worten kann der Kühlmitteltank frei von Vorrichtungskomponenten sein, welche vollständig oder teilweise im Innenraum des Kühlmitteltanks angeordnet sind.

Ein Vorteil hierbei ist, dass das im Innenraum des Kühlmitteltanks für Kühlmittel zur Verfügung stehende Volumen maximiert wird und dass eine Beeinflussung einer Temperatur die einzelnen Vorrichtungskomponenten durch die Temperatur des Kühlmittels im Kühlmitteltank und/oder eine Wechselwirkung der Vorrichtungskomponenten untereinander aufgrund der Anordnung in einer gemeinsamen Kühlmittelumgebung ausgeschlossen wird.

Erfindungsgemäß weist das Kühlmittelführungssystem zumindest ein erstes Steuerventil, welches dazu eingerichtet ist, die Einleitung von Kühlmittel in zumindest einen ersten der Kühlmittelkreisläufe zu steuern oder zu regeln, auf. Optional kann das erste Steuerventil einen Drehaktuator umfassen, der dazu ausgebildet ist, das Steuerventil von einer Freigabestellung in eine Verschlussstellung und/oder von einer Verschlussstellung in eine Freigabestellung zu bewegen. Das erste Steuerventil kann ein Drehventil mit mehreren möglichen Ventilstellungen sein.

Ein Vorteil des Kühlmittelführungssystems mit zumindest einem Steuerventil ist, dass das Kühlmittel aus dem Kühlmitteltank selektiv und/oder bedarfsabhängig einem oder mehreren der Kühlmittelkreisläufe über die Kühlmittelkanäle zugeführt werden kann. Das Steuerventil kann an den Kühlmittelkanälen und/oder an dem Kühlmitteltank angeordnet sein. Der Kühlmitteltank und/oder die Kühlmittelkanäle können einen oder mehrere Aufnahmeabschnitte zur Aufnahme oder Anordnung von Steuerventilen, zum Beispiel von Steuerventilen in Form von Drehaktuatoren, aufweisen.

Weiter kann das Kühlmittelführungssystem eine Steuerung oder Regelung für das eine oder die mehreren Steuerventile aufweisen, zum Beispiel in Form einer elektronischen Steuerungs- oder Regelungsvorrichtung. Die Steuerungs- oder Regelungsvorrichtung kann an den Kühlmittelkanälen und/oder an dem Kühlmitteltank angeordnet sein. Der Kühlmitteltank und/oder die Kühlmittelkanäle können weiter eine oder mehrere Aufnahmen für eine oder mehrere Steuerungs- oder Regelungsvorrichtungen, insbesondere vorbereitete Vertiefungen in dem Kühlmitteltank und/oder in zumindest einer Tankkomponente, aufweisen.

Ein Vorteil hierbei ist, dass das Kühlmittelführungssystem mit einer integrierten Regelung und/oder Steuerung für die Kühlmittelkreisläufe raumeffizient und als modulare Baugruppe bereitgestellt werden kann. Hierdurch können die Möglichkeiten und der Aufwand für die Anordnung des Kühlmittelführungssystems in einem Kraftfahrzeug verbessert werden.

In einer Variante kann das erste Steuerventil als Teil einer, insbesondere modularen, Kühlmittelverteilerbaugruppe ausgebildet sein, welche getrennt von dem Kühlmitteltank gefertigt und insbesondere lösbar an einem oder mehreren der Kühlmittelkanäle angeordnet sein kann. Die Kühlmittelverteilerbaugruppe kann optional weitere Vorrichtungskomponenten, zum Beispiel eine Kühlmittelpumpe, und/oder vorbereitete Aufnahmen für Vorrichtungskomponenten aufweisen.

Erfindungsgemäß ist das erste Steuerventil dazu eingerichtet die Einleitung von Kühlmittel in zumindest zwei Kühlmittelkreisläufe zu steuern Erfindungsgemäß weist das erste Steuerventil zumindest zwei Ventilabschnitte auf, die jeweils dazu eingerichtet sind, die Einleitung von Kühlmittel in jeweils einen der mehreren Kühlmittelkreisläufe zu steuern Die beiden Ventilabschnitte sind erfindungsgemäß jeweils dazu eingerichtet sein, gemeinsam miteinander bewegt, zu werden.

Zum Beispiel kann das erste Steuerventil ein drehbares oder rotierbares Flüssigkeitsventil sein, das zumindest zwei entlang einer gemeinsamen Rotationsachse angeordnete Ventilabschnitte aufweist, die jeweils zur Steuerung oder Regelung unterschiedlicher Kühlmittelkreisläufe eingerichtet sind. Die Ventilabschnitte können fest miteinander verbunden und/oder zueinander unbeweglich angeordnet sein, sodass die Ventilabschnitte ausschließlich gemeinsam um die Rotationsachse gedreht oder rotiert werden können.

Das Steuerventil, welches dazu eingerichtet ist, zumindest zwei Kühlmittelkreisläufe zu steuern ist erfindungsgemäß zumindest teilweise in zwei verschiedenen Kühlmittelkanälen angeordnet, wobei diese zumindest zwei verschiedenen Kühlmittelkanäle jeweils dazu eingerichtet sind, Kühlmittel in zwei verschiedene Kühlmittelkreisläufe einzuleiten. Die beiden voneinander verschiedenen Kühlmittelkanäle können im Bereich des Steuerventils zumindest abschnittsweise parallel zueinander verlaufen und/oder angeordnet sein. In einer Variante kann das Steuerventil zumindest einen der zwei voneinander verschiedenen Kühlmittelkanäle queren und/oder zumindest teilweise durchdringen. Ein erster Ventilabschnitt des Steuerventils kann an oder in dem ersten Kühlmittelkanal angeordnet sein und ein zweiter Abschnitt des Kühlmittelkanals kann an oder in dem zweiten Kühlmittelkanal angeordnet sein.

Ein Vorteil hierbei ist, dass mehrere, zum Beispiel zwei, Kühlmittelkreisläufe durch ein einziges Ventil gesteuert werden können, sodass der Aufwand zur Steuerung oder Bewegung der Ventile reduziert wird. Weiter wird hierdurch eine Präzision der Steuerung der Kühlmittelkreisläufe verbessert, da ein Steuerventil mit zumindest zwei zueinander unbeweglichen Ventilabschnitten für verschiedene Kühlmittelkreisläufe stets ein vorbestimmtes Verhältnis zwischen den Kühlmitteleinleitungen in die verschiedenen Kühlmittelkreisläufe definiert.

Weitere Vorteile des Steuerventils mit mehreren Ventilabschnitten sind eine Verbesserung der Raumeffizienz der Steuerventile gegenüber jeweils einzelnen Steuerventilen für jeden Kühlmittelkreislauf und eine Reduzierung des, insbesondere elektronischen, Steuer- oder Regelungsaufwand durch eine Reduzierung der zu implementierenden Regelkreise.

Alternativ oder ergänzend kann die Vorrichtung weiter ein zweites Steuerventil aufweisen, welches dazu eingerichtet ist, die Einleitung von Kühlmittel in einen zweiten Kühlmittelkreislauf zu steuern oder zu regeln. Das zweite Steuerventil kann zum Beispiel einen Drehaktuator umfassen, der dazu ausgebildet ist das Steuerventil von einer Freigabestellung in eine Verschlussstellung und/oder von einer Verschlussstellung in eine Freigabestellung zu bewegen. Das zweite Steuerventil kann ein Drehventil mit mehreren möglichen Ventilstellungen sein.

In einer Ausführungsform kann das zweite Steuerventil an einer dem ersten Steuerventil gegenüberliegenden Seite eines einstückig gefertigten Vorrichtungselements, zum Beispiel eines Teils einer Kühlmittelverteilerbaugruppe oder eines Abschnitts der Kühlmittelkanäle, angeordnet sein. Optional können das erste und das zweite Steuerventil um eine gedachte gemeinsame Rotationsachse drehbar und oder rotierbar sein. Das erste und/oder das zweite Steuerventil können im Uhrzeigersinn und/oder entgegen des Uhrzeigersinns rotierbar sein.

Ein Vorteil hierbei ist, dass die einander gegenüberliegende Anordnung von Steuerventilen eine Raumeffizienz des Kühlmittelführungssystems verbessert.

Eine Kühlmittelverteilerbaugruppe für ein Kraftfahrzeug mit mehreren Kühlmittelkreisläufen weist mehrere Kühlmittelröhren auf, die jeweils dazu eingerichtet sind, Kühlmittel für ein Kraftfahrzeug in einen Kühlmittelkreislauf einzuleiten. Weiter hat die Kühlmittelverteilerbaugruppe zumindest ein erstes Steuerventil, welches dazu eingerichtet ist, die Einleitung von Kühlmittel aus den Kühlmittelröhren in zumindest einen ersten Kühlmittelkreislauf zu steuern oder zu regeln. Zumindest einen Teil einer Wandung jeder der mehreren Kühlmittelröhren ist durch ein einstückig gefertigtes Vorrichtungselement ausgebildet.

Ein Vorteil der Kühlmittelverteilerbaugruppe ist, dass diese zum Beispiel durch ein Spritzgussverfahren sehr effizient hergestellt werden kann, wobei die Kühlmittelkanäle jeweils zumindest teilweise durch ein einstückig, zum Beispiel durch ein Spritzgussverfahren, hergestelltes Vorrichtungselement ausgebildet werden.

Das einstückig gefertigte Vorrichtungselement kann Teile von Wandungen von zumindest zwei unterschiedlichen Kühlmittelröhren mit zwei unterschiedlichen, insbesondere einander gegenüberliegenden, Oberflächen oder Außenseiten ausbilden. Mit anderen Worten kann das einstückig ausgebildete Vorrichtungselement jeweils zumindest Teile der Kühlmittelröhren ausbilden, wobei die jeweils zumindest teilweise durch das Vorrichtungselement ausgebildeten Kühlmittelröhren an oder auf unterschiedlichen, insbesondere an oder auf einander gegenüberliegenden, Oberflächen oder Seiten des Vorrichtungselements angeordnet sind.

Ein weiterer Vorteil ist, dass die Kühlmittelverteilerbaugruppe modular gefertigt und in ein Kraftfahrzeug angeordnet und/oder mit einem Kühlmittelführungssystem gekoppelt werden kann. Hierdurch wird zum Beispiel ein Austausch der Kühlmittelverteilerbaugruppe im Beschädigungsfall oder die Entnahme der Kühlmittelverteilerbaugruppe zur Wartung erleichtert.

Die Kühlmittelverteilerbaugruppe kann zum Beispiel mindestens 2, 4, 6, 8 oder 10 Kühlmittelröhren aufweisen, deren Wandungen jeweils zumindest teilweise durch das einstückig gefertigte Vorrichtungselement ausgebildet sind.

In einer Ausführungsform kann die Kühlmittelverteilerbaugruppe zum Beispiel dazu eingerichtet sein, mit einem Kühlmittelführungssystem mit mehreren Kühlmittelkanälen gekoppelt oder verbunden zu werden. Die Kühlmittelröhren der Kühlmittelverteilerbaugruppe können jeweils dazu eingerichtet sein, lösbar an einem von der Kühlmittelverteilerbaugruppe getrennt ausgebildeten Kühlmitteltank oder an einem von der Kühlmittelverteilerbaugruppe getrennt ausgebildeten Kühlmittelführungssystem angeordnet und/oder mit diesen gekoppelt zu werden. Die Kühlmittelröhren der Kühlmittelverteilerbaugruppe können insbesondere mit Kühlmittelkanälen eines Kühlmittelführungssystems gekoppelt und/oder verbunden werden, sodass Kühlmittel aus dem Kühlmitteltank des Kühlmittelführungssystems durch die Kühlmittelkanäle in die Kühlmittelröhren der Kühlmittelverteilerbaugruppe geleitet werden kann und/oder gelangen kann.

In einer Variante können die Kühlmittelröhren zumindest abschnittsweise parallel zueinander angeordnet sein. Weiter können die Kühlmittelröhren jeweils einen Schlauchanschluss für einen Kühlmittelschlauch aufweisen. Hierdurch kann die Anordnung von Kühlmittelschläuchen für verschiedene Kühlmittelkreisläufe an der Kühlmittelverteilerbaugruppe verbessert, insbesondere erleichtert, werden.

Das erste Steuerventil kann einen Drehaktuator umfassen, der dazu ausgebildet ist das Steuerventil von einer Freigabestellung in eine Verschlussstellung und/oder von einer Verschlussstellung in eine Freigabestellung zu bewegen. Das erste Steuerventil kann ein Drehventil mit mehreren möglichen Ventilstellungen sein.

Das erste Steuerventil kann weiter dazu eingerichtet sein, die Einleitung von Kühlmittel in zumindest zwei Kühlmittelkreisläufe zu steuern oder zu regeln. In einer Ausführungsform kann das erste Steuerventil zumindest zwei Ventilabschnitte aufweisen, die jeweils dazu eingerichtet sind, die Einleitung von Kühlmittel in jeweils einen der mehreren Kühlmittelkreisläufe zu steuern oder zu regeln. Die beiden Ventilabschnitte können jeweils dazu eingerichtet sein, gemeinsam miteinander bewegt, insbesondere gemeinsam miteinander rotiert, zu werden.

Zum Beispiel kann das erste Steuerventil ein drehbares oder rotierbares Flüssigkeitsventil sein, das zumindest zwei entlang einer gemeinsamen Rotationsachse angeordnete Ventilabschnitte aufweist, die jeweils zur Steuerung oder Regelung unterschiedlicher Kühlmittelkreisläufe eingerichtet sind. Die Ventilabschnitte können fest miteinander verbunden und/oder zueinander unbeweglich angeordnet sein, sodass die Ventilabschnitte ausschließlich gemeinsam um die Rotationsachse gedreht oder rotiert werden können.

Das Steuerventil, welches dazu eingerichtet ist, zumindest zwei Kühlmittelkreisläufe zu steuern oder zu regeln, kann zumindest teilweise in und/oder an zwei verschiedenen Kühlmittelröhren angeordnet sein, wobei diese zumindest zwei verschiedenen Kühlmittelröhren jeweils dazu eingerichtet sind, Kühlmittel in zwei verschiedene Kühlmittelkreisläufe einzuleiten. Die beiden voneinander verschiedenen Kühlmittelröhren können im Bereich des Steuerventils zumindest abschnittsweise parallel zueinander verlaufen und/oder angeordnet sein. In einer Variante kann das Steuerventil zumindest einen der zwei voneinander verschiedenen Kühlmittelröhren queren oder zumindest teilweise durchdringen. Ein erster Ventilabschnitt des Steuerventils kann an oder in einer ersten Kühlmittelröhre angeordnet sein und ein zweiter Abschnitt der Kühlmittelröhre kann an oder in der zweiten Kühlmittelröhre angeordnet sein.

Ein Vorteil hierbei ist, dass mehrere, zum Beispiel zwei, Kühlmittelkreisläufe durch ein einziges Ventil gesteuert werden können, sodass der Aufwand zur Steuerung oder Bewegung der Ventile reduziert wird. Weiter wird hierdurch eine Präzision der Steuerung der Kühlmittelkreisläufe verbessert, da ein Steuerventil mit zumindest zwei zueinander unbeweglichen Ventilabschnitten für verschiedene Kühlmittelkreisläufe stets ein vorbestimmtes Verhältnis zwischen den Kühlmitteleinleitungen in die verschiedenen Kühlmittelkreisläufe definiert.

Alternativ oder ergänzend kann die Kühlmittelverteilerbaugruppe ein zweites Steuerventil aufweisen, welches dazu eingerichtet ist, die Einleitung von Kühlmittel in zumindest einen zweiten Kühlmittelkreislauf zu steuern oder zu regeln.

Das zweite Steuerventil kann einen Drehaktuator umfassen, der dazu ausgebildet ist das Steuerventil von einer Freigabestellung in eine Verschlussstellung und/oder von einer Verschlussstellung in eine Freigabestellung zu bewegen. Das zweite Steuerventil kann ein Drehventil mit mehreren möglichen Ventilstellungen sein.

In einer Ausführungsform kann das zweite Steuerventil an einer dem ersten Steuerventil gegenüberliegenden Seite des einstückig gefertigten Vorrichtungselements angeordnet sein.

Mit anderen Worten kann das erste Steuerventil an oder auf einer ersten Seite oder Oberfläche des einstückig gefertigten Vorrichtungselements angeordnet sein und/oder das zweite Steuerventil kann an oder auf einer zweiten Seite oder Oberfläche des einstückig gefertigten Vorrichtungselements angeordnet sein.

Ein Vorteil hierbei ist, dass die einander gegenüberliegende Anordnung von Steuerventilen eine Raueffizienz des Kühlmittelführungssystems verbessert und zudem effizient zu fertigen ist.

Das erste und das zweite Steuerventil können um eine gemeinsame, insbesondere gedachte, Rotationsachse rotierbar oder drehbar sein. Das erste und das zweite Steuerventil können jeweils im Uhrzeigersinn und/oder entgegen des Uhrzeigersinns um die, insbesondere gedachte, gemeinsame Rotationsachse rotierbar oder drehbar sein.

Das erste und das zweite Steuerventil können jeweils die Kühlmitteleinleitung in einen oder in mehrere Kühlmittelkreisläufe steuern oder regeln. In einer Variante können das erste und das zweite Steuerventil dazu eingerichtet sein, die Kühlmitteleinleitung in einen ersten Kühlmittelkreislauf zu steuern und/oder zu regeln.

Weiter kann die Kühlmittelverteilerbaugruppe zumindest eine Kühlmittelpumpe aufweisen, die dazu ausgebildet ist, die Einleitung des Kühlmittels in zumindest einen der Kühlmittelkreisläufe zu bewirken. Die Kühlmittelpumpe kann in einer hierfür vorgesehenen Pumpenaufnahme in der Kühlmittelverteilerbaugruppe angeordnet sein und/oder gemeinsam mit der Kühlmittelverteilerbaugruppe bereitgestellt und in einem Kraftfahrzeug und/oder an einem Kühlmittelführungssystem angeordnet werden.

Optional kann die Kühlmittelverteilerbaugruppe zudem zumindest einen Temperatursensor aufweisen, der dazu eingerichtet ist, eine Temperatur eines Kühlmittels in zumindest einer der Kühlmittelröhren zu erfassen.

Zudem kann eine elektronische Steuerungseinheit dazu eingerichtet sein, das erste und/oder das zweite Steuerungsventil und/oder die zumindest eine Kühlmittelpumpe zu steuern oder zu regeln. Insbesondere kann die elektronische Steuerungseinheit dazu eingerichtet sein, das erste und/oder das zweite Steuerungsventil und/oder die zumindest eine Kühlmittelpumpe zumindest teilweise basierend auf einer Erfassung des zumindest einen Temperatursensors zu steuern oder regeln.

Weitere Merkmale, Eigenschaften, Vorteile und mögliche Abwandlungen werden für einen Fachmann anhand der nachstehenden Beschreibung deutlich, in der auf die beigefügten Zeichnungen Bezug genommen ist. Dabei zeigen die Fig. jeweils schematisch Beispiele für ein Kühlmittelführungssystem oder für eine Kühlmittelverteilerbaugruppe.
- Fig. 1 und 2: zeigen ein erstes Beispiel für ein Kühlmittelführungssystem.
- Fig. 3 und 4: zeigen ein zweites Beispiel für ein Kühlmittelführungssystem.
- Fig. 5 und 6: zeigen ein drittes Beispiel für ein Kühlmittelführungssystem.
- Fig. 7 bis 9: zeigen ein Beispiel für eine Kühlmittelverteilerbaugruppe.

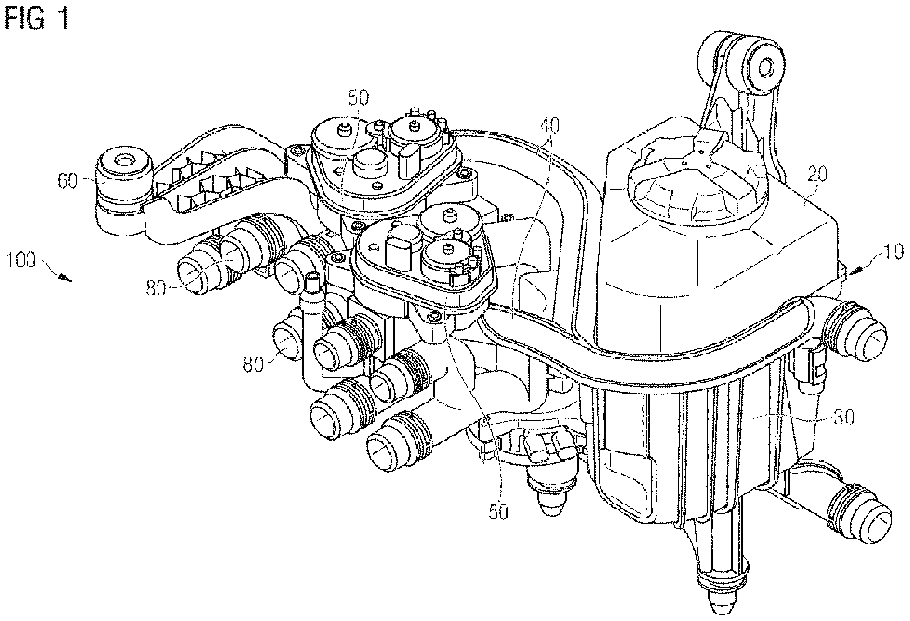

Sofern nicht explizit anders angegeben, sind übereinstimmende oder in ihrer Funktion vergleichbare Komponenten und Bestandteile in den schematischen Fig. 1 bis 9 mit übereinstimmenden Bezugszeichen versehen.

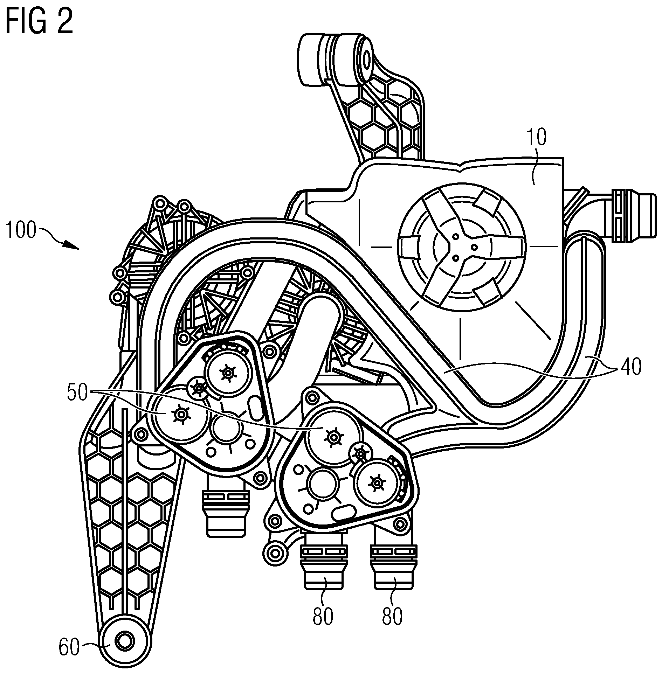

Die Fig. 1 zeigt ein Kühlmittelführungssystem 100, welches einen Kühlmitteltank 10 und mehrere Kühlmittelkanäle 40 aufweist. Die Fig. 2 zeigt dasselbe Kühlmittelführungssystem aus einer anderen Perspektive, nämlich aus einer Draufsicht.

Die Kühlmittelkanäle 40 sind dazu eingerichtet, das Kühlmittel aus dem Kühlmitteltank 10 in verschiedene Kühlmittelkreisläufe eines Kraftfahrzeugs einzuleiten. Zu diesem Zweck sind die Kühlmittelkanäle 40 zumindest teilweise an dem Kühlmitteltank 10 angeordnet und weisen Schlauchaufnahmen 80 auf, die jeweils zur Verbindung oder zur Kopplung mit einem Kühlmittelschlauch (nicht gezeigt) eingerichtet sind.

Der Tank 10 umfasst zwei Tankkomponenten 20, 30, die jeweils mit einem Spritzgussverfahren aus einem Kunststoffmaterial hergestellt sind. Die Tankkomponenten 20, 30 weisen jeweils einen halbschalenförmigen Abschnitt auf und bilden im Zusammenwirken den Kühlmitteltank 10 aus. Der Innenraum des gezeigten Kühlmitteltanks 10 ist frei von Leitungen und anderen Vorrichtungselementen wie Pumpen oder Ventilen.

Die Kühlmittelkanäle 40 sind starre unflexible Kühlmittelführungen und werden ebenfalls durch halbschalenförmige Abschnitte der beiden Tankkomponenten 20, 30 ausgebildet. Die gezeigten Kühlmittelkanäle 40 sind somit ebenfalls aus einem Kunststoff mittels eines Spritzgussverfahrens hergestellt und gemeinsam mit dem Kühlmitteltank 10 ausgebildet.

Zumindest einer der Kühlmittelkanäle 40 weist eine durch die Tankkomponenten 20, 30 ausgebildete Kanalwandung auf, die zumindest abschnittsweise an der Außenwandung des Kühlmitteltanks 10, welche ebenfalls durch die Tankkomponenten 20, 30 ausgebildet ist, angeordnet und dazu eingerichtet ist, das Kühlmittel zumindest abschnittsweise der Kontur der Außenwandung des Kühlmitteltanks 10 folgend zu leiten.

Im gezeigten Beispiel sind die Kanalwandung und die Außenwandung des Kühlmitteltanks 10 zumindest abschnittsweise einstückig ausgebildet.

Weiter zeigen die Fig. 1 und 2 die Steuerventile 50, welche die Kühlmittelzufuhr aus dem Kühlmitteltank 10 in die mehreren Kühlmittelkreisläufe regulieren. Die Steuerventile 50 sind jeweils an den Kühlmittelkanälen 40 angeordnet und umfassen jeweils einen Drehaktuator, die die Steuerventile jeweils von einer Freigabeposition in eine Verschlussposition oder von einer Verschlussposition in eine Freigabeposition bewegen kann. Die Steuerventile 50 sind jeweils Drehventile mit mehreren möglichen Ventilstellungen.

Weiter ist das in den Fig. 1 und 2 gezeigte Kühlmittelführungssystem 100 dazu eingerichtet, mittels der gezeigten Befestigungsmittel 60 in einem Kraftfahrzeug mit mehreren Kühlmittelkreisläufen, zum Beispiel in einem Fahrzeug mit einem elektrischen Antrieb, angeordnet und befestigt zu werden.

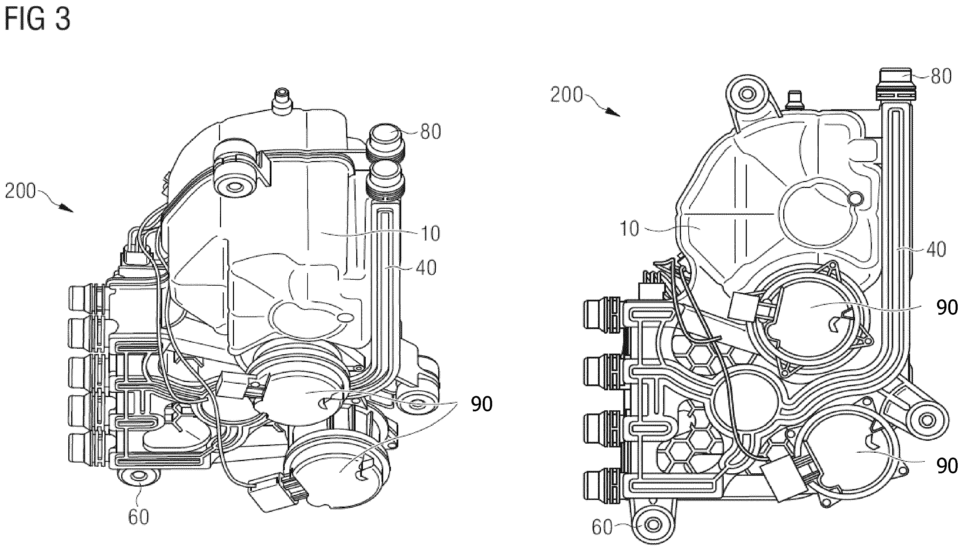

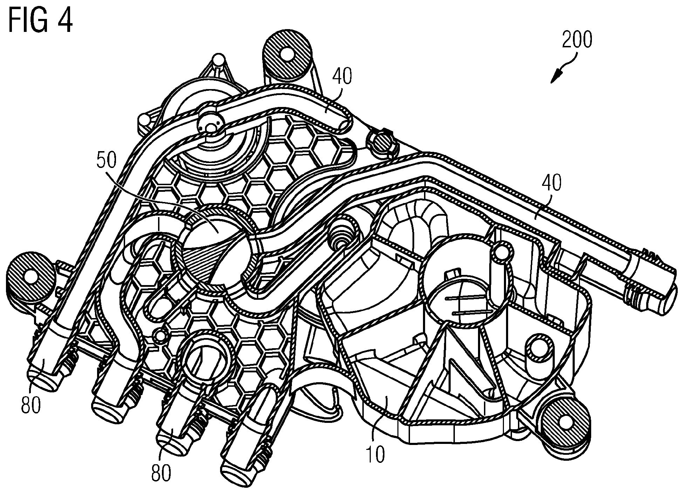

Fig. 3 zeigt eine weiteres Kühlmittelführungssystem 200. Die Fig. 4 zeigt das in der Fig. 3 perspektivisch gezeigte Kühlmittelführungssystem 200 in einer Schnittdarstellung.

Die einzelnen Komponenten des Kühlmittelführungssystems 200 sowie deren Funktion korrespondieren zu den mit Bezug auf die Fig. 1 und die Fig. 2 beschriebenen Vorrichtungskomponenten. Darüber hinaus weist das Kühlmittelführungssystems 200 zwei Kühlmittelpumpen 90, welche jeweils dazu eingerichtet sind, Kühlmittel in zumindest einen der Kühlmittelkreisläufe einzupumpen.

Wie weiter anhand der Fig. 4 deutlich zu erkennen ist, ist auch hier zumindest einer der Kühlmittelkanäle 40 zumindest abschnittsweise an der Außenwandung des Kühlmitteltanks 10 angeordnet, das heißt an der Außenwandung des Kühlmitteltanks 10 angelegt und/oder geringfügig von dieser beabstandet. Der zumindest eine abschnittsweise an der Außenwandung des Kühlmitteltanks 10 angeordnete Kühlmittelkanal 40 leitet das Kühlmittel aus dem Kühlmitteltank zumindest abschnittsweise einer Kontur der Außenwandung folgend.

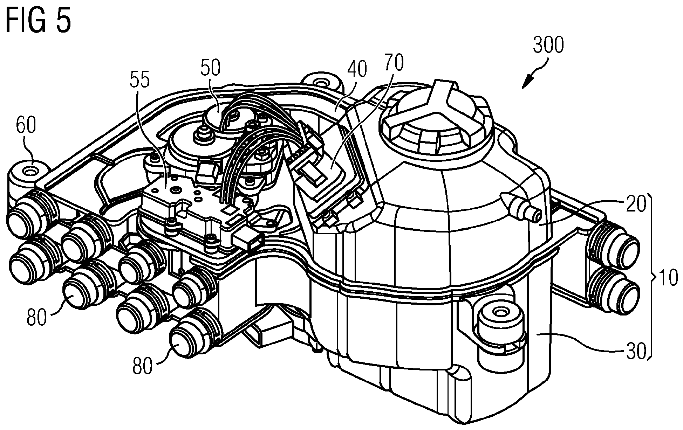

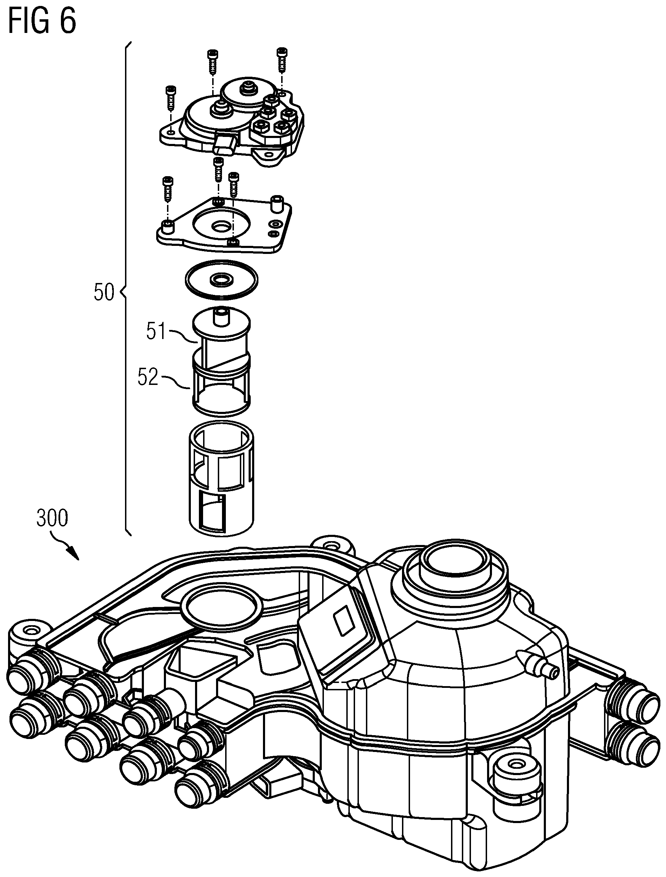

Die Fig. 5 und 6 zeigen ein weiteres Beispiel für ein Kühlmittelführungssystem 300. Ebenso wie bei dem in den Fig. 1 und 2 gezeigten Beispielen hat das Kühlmittelführungssystem 300 einen Kühlmitteltank 10 und mehrere Kühlmittelkanäle 40 zur Leitung von Kühlmittel aus dem Kühlmitteltank 10, wobei der Kühlmitteltank 10 und die Kühlmittelkanäle 40 jeweils durch die beiden Tankkomponenten 20, 30 ausgebildet werden, welche mittels eines Spritzgussverfahrens aus einem Kunststoffmaterial hergestellt sind. Das Kühlmittelführungssystem 300 kann mit Hilfe der Befestigungsmittel 60 in einem Kraftfahrzeug angeordnet und befestigt werden. Die Kühlmittelkanäle 40 weisen Schlauchaufnahmen 80 zur Verbindung mit Kühlmittelschläuchen für mehrere Kühlmittelkreisläufe auf.

Weiter umfasst das in der Fig. 5 gezeigte Kühlmittelführungssystem 300 ein erstes Steuerventil 50 und ein zweites, von dem ersten Steuerventil 50 verschiedenes, Steuerventil 55. Das erste und das zweite Steuerventil sind jeweils an den Kühlmittelkanälen 40 angeordnet und jeweils dazu eingerichtet, eine Kühlmitteleinleitung in einen oder mehrere der Kühlmittelkreisläufe zu regulieren. Das erste Steuerventil 50 und das zweite Steuerventil 55 werden jeweils durch die Steuerungseinheit 70 gesteuert. Die Steuereinheit 70 ist eine elektronische Steuerung, die mit den beiden Steuerventilen 50, 55 über Steuerleitungen verbunden und in einer Steuerungsaufnahme an dem Kühlmitteltank 10 angeordnet ist.

Das erste Steuerventil 50 ist in der Fig. 6 detaillierter dargestellt. Das Steuerventil 50 ist in dem in den Fig. 5 und 6 gezeigten Kühlmittelführungssystem 300 ein drehbares Steuerventil mit einem ersten Ventilabschnitt 51 und einem zweiten Ventilabschnitt 52, welche jeweils gemeinsam durch einen Drehaktuator um eine Rotationsachse rotiert werden können. Jeder der beiden Ventilabschnitte 51 und 52 reguliert oder steuert hierbei die Kühlmittelzufuhr in einen der mehreren Kühlmittelkreisläufe, sodass das erste Steuerventil 50 insgesamt die Kühlmitteleinleitung in zumindest zwei verschiedene Kühlmittelkreisläufe steuern kann.

Das erste Steuerventil 50 mit den beiden Ventilabschnitten 51 und 52 ist dazu eingerichtet, an und/oder zumindest teilweise in zwei übereinander und/oder abschnittsweise parallel zueinander angeordneten Kühlmittelkanälen 40 angeordnet zu werden, sodass durch eine Drehung des ersten Steuerventils 50 um eine Rotationsachse der Durchfluss von Kühlmittel durch die zwei Kühlmittelkanäle jeweils freigegeben oder blockiert werden kann. Die Drehung des ersten Steuerventils kann hierbei durch einen Drehaktuator bewirkt werden, der durch die Steuerung 70 gesteuert werden kann.

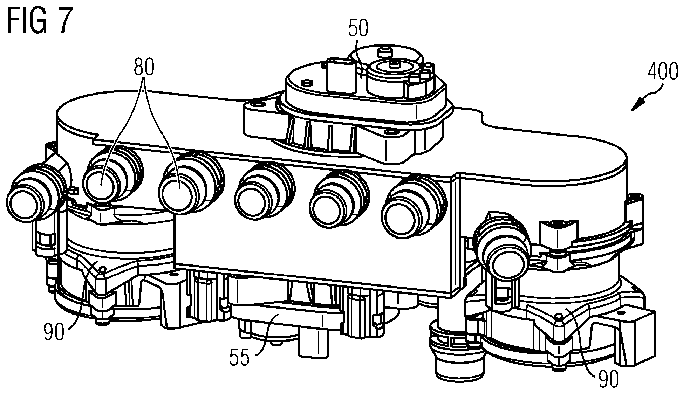

Die Fig. 7 zeigt eine Kühlmittelverteilerbaugruppe 400 für ein Kraftfahrzeug mit mehreren Kühlmittelkreisläufen. Die Kühlmittelverteilerbaugruppe 400 hat mehrere Kühlmittelröhren, die jeweils dazu eingerichtet sind, Kühlmittel in einen Kühlmittelkreislauf einzuleiten. Hierzu weist die Kühlmittelverteilerbaugruppe 400 mehrere Schlauchaufnahmen 80 an den Kühlmittelröhren auf, welche die Anordnung und Fixierung von Kühlmittelschläuchen für die Kühlmittelkreisläufe an den Kühlmittelröhren erlauben.

Die Kühlmittelröhren sind dazu eingerichtet, jeweils lösbar an einem von der Kühlmittelverteilerbaugruppe 400 getrennt ausgebildeten Kühlmitteltank oder an einem von der Kühlmittelverteilerbaugruppe 400 getrennt ausgebildeten Kühlmittelführungssystem angeordnet zu werden. Die Kühlmittelröhren der Kühlmittelverteilerbaugruppe 400 können insbesondere an Kühlmittelkanälen eines Kühlmittelführungssystem angeordnet zu werden.

Die Fig. 7 zeigt weiter ein erstes Steuerventil 50, welches dazu eingerichtet ist, die Einleitung von Kühlmittel aus den Kühlmittelröhren in zumindest einen ersten Kühlmittelkreislauf zu steuern und ein zweites Steuerventil 55, welches dazu eingerichtet ist, die Einleitung von Kühlmittel aus den Kühlmittelröhren in zumindest einen zweiten Kühlmittelkreislauf zu steuern. Unterstützt wird die Einleitung von Kühlmittel in die verschiedenen Kühlmittelkreisläufe durch die an der Kühlmittelverteilerbaugruppe 400 angeordneten Kühlmittelpumpen 90, welche jeweils dazu eingerichtet sind, Kühlmittel in zumindest einen der Kühlmittelkreisläufe einzupumpen.

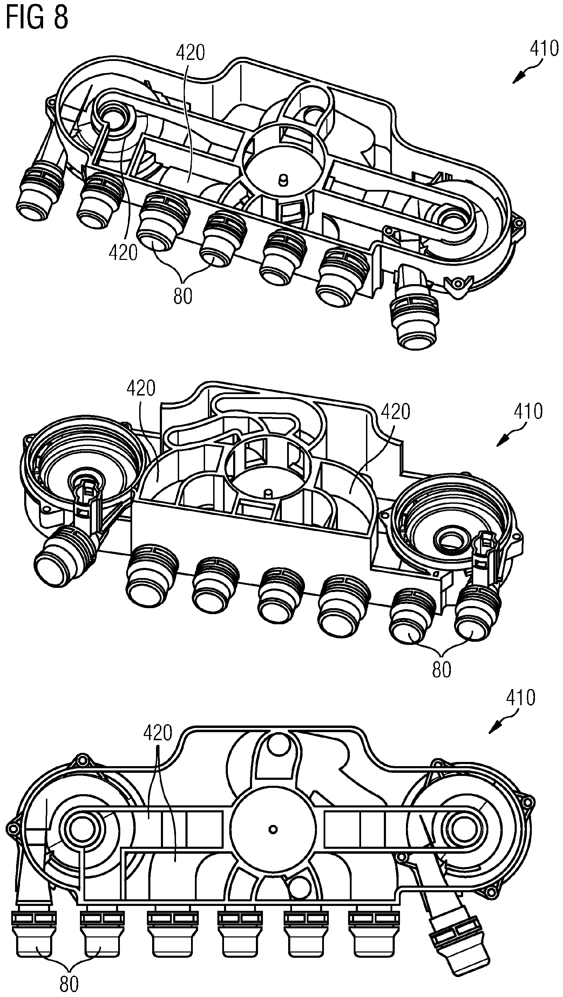

Wie in der Fig. 8 genauer gezeigt, umfasst die in der Fig. 7 gezeigte Kühlmittelverteilerbaugruppe 400 ein einstückig gefertigtes Vorrichtungselement 410, welches zumindest einen Teil einer Wandung jeder der mehreren Kühlmittelröhren 420 ausbildet. Mit anderen Worten hat die Kühlmittelverteilerbaugruppe 400 mehrere Kühlmittelröhren 420, wobei jede der Kühlmittelröhren 420 zumindest teilweise durch ein einstückig ausgebildetes Vorrichtungselement 410 ausgebildet ist. Das einstückig ausgebildete Vorrichtungselement 410 kann zum Beispiel ein durch ein Spritzgussverfahren hergestelltes Kunststoffelement sein.

Die Kühlmittelröhren 420 sind auf zwei einander gegenüberliegenden Seiten des Vorrichtungselements 410 ausgebildet. Das Vorrichtungselement 410 weist ferner Durchbrüche auf, die den Übertritt von Kühlmittel von einer Seite des Vorrichtungselements 410 zu einer jeweils gegenüberliegenden Seite des Vorrichtungselements 410 ermöglichen.

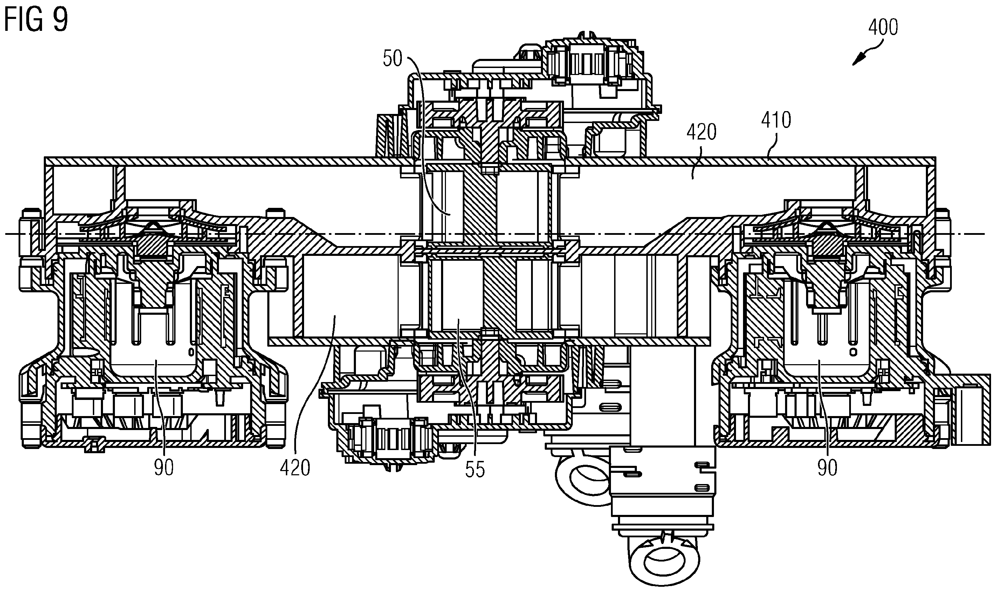

Die Fig. 9 zeigt, dass sowohl die Kühlmittelpumpen 90 als auch das erste Steuerventil 50 und das zweite Steuerventil 55 an und/oder auf dem einstückig gefertigten Vorrichtungselement 410 angeordnet werden können. Das erste Steuerventil 50 und das zweite Steuerventil 55 sind jeweils mit einem Drehaktuator drehbare Steuerventile, die an unterschiedlichen, nämlich an zwei einander gegenüberliegenden, Seiten des einstückig gefertigten Vorrichtungselements 410 angeordnet sind. Das erste Steuerventil 50 und das zweite Steuerventil 55 regulieren jeweils die Kühlmittelzuführung in unterschiedliche Kühlmittelkreisläufe, sind jedoch um dieselbe gedachte Rotationsachse drehbar. Mit anderen Worten ist die gedachte Rotationsachse des ersten Steuerventils 50 identisch mit der gedachten Rotationsachse des zweiten Steuerventils 55.

Die vorangehend beschriebenen Varianten dienen lediglich dem besseren Verständnis der Struktur, der Funktionsweise und der Eigenschaften der hier offenbarten Gegenstände; sie schränken die Offenbarung nicht etwa auf die Ausführungsbeispiele ein. Die Fig. sind schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei können jede Funktionsweise, jedes Prinzip, jede technische Ausgestaltung und jedes Merkmal, welches/welche in den Fig. oder im Text offenbart ist/sind, mit allen Ansprüchen, jedem Merkmal im Text und in den anderen Figuren, anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Vorgehensweise zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart.

## Patentansprüche

1. Ein Kühlmittelführungssystem (100, 200, 300) für ein Kraftfahrzeug mit mehreren Kühlmittelkreisläufen, aufweisend
einen Kühlmitteltank (10) mit einem Innenraum, der dazu eingerichtet ist, ein Kühlmittel zu bevorraten,
mehrere Kühlmittelkanäle (40), welche dazu eingerichtet sind, das Kühlmittel aus dem Kühlmitteltank in zumindest zwei Kühlmittelkreisläufe einzuleiten, wobei zumindest einer der Kühlmittelkanäle durch eine Kanalwandung ausgebildet ist, die zumindest teilweise an einer Außenwandung des Kühlmitteltanks angeordnet und dazu eingerichtet ist, das Kühlmittel zumindest abschnittsweise einer Kontur der Außenwandung des Kühlmitteltanks folgend zu leiten,
**dadurch gekennzeichnet, dass** zumindest ein erstes Steuerventil (50), welches dazu eingerichtet ist, die Einleitung von Kühlmittel in zumindest zwei Kühlmittelkreisläufe zu steuern, wobei das erste Steuerventil zumindest zwei zueinander unbewegliche Ventilabschnitte (51, 52) aufweist, die jeweils dazu eingerichtet sind, die Einleitung von Kühlmittel in jeweils einen der mehreren Kühlmittelkreisläufe zu steuern und die jeweils dazu eingerichtet sind, gemeinsam miteinander bewegt zu werden,
wobei das erste Steuerventil (50) zumindest teilweise in zwei verschiedenen Kühlmittelkanälen (40) angeordnet ist.

2. Kühlmittelführungssystem (100, 200, 300) nach dem vorangegangenen Anspruch, wobei
zumindest ein Teil der Kanalwandung des zumindest einen Kühlmittelkanals (40) und zumindest ein Teil der Außenwandung des Kühlmitteltanks einstückig miteinander ausgebildet sind.

3. Kühlmittelführungssystem (100, 200, 300) nach einem der vorangegangenen Ansprüche, wobei
der Kühlmitteltank durch zwei aneinander angeordnete Tankkomponenten (20, 30), welche gemeinsam den Innenraum bis auf Öffnungen für die Kühlmittelkanäle (40) und/oder Öffnungen für eine Kühlmittelzufuhr umschließen, ausgebildet ist.

4. Kühlmittelführungssystem (100, 200, 300) nach dem vorangegangenen Anspruch, wobei
die zwei aneinander angeordneten Tankkomponenten (20, 30) im Zusammenwirken weiter zumindest einen Teil eines der mehreren Kühlmittelkanäle (40) ausbilden.

5. Kühlmittelführungssystem (100, 200, 300) nach einem der vorangegangenen Ansprüche, wobei
der Innenraum des Kühlmitteltanks (10) leitungsfrei und/oder frei von Ventilen, Pumpen oder Steuerungsvorrichtungen ist.

6. Kühlmittelführungssystem (100, 200, 300) nach einem der vorangegangenen Ansprüche, wobei
das erste Steuerventil (50) einen Drehaktuator umfasst.

7. Kühlmittelführungssystem (100, 200, 300) nach einem der vorangegangenen Ansprüche, wobei
das erste Steuerventil (50) als Teil einer Kühlmittelverteilerbaugruppe (400) ausgebildet ist, welche getrennt von dem Kühlmitteltank (10) gefertigt und insbesondere lösbar an den mehren Kühlmittelkanälen (40) angeordnet ist.

8. Kühlmittelführungssystem (100, 200, 300) nach einem der vorangegangenen Ansprüche, weiter umfassend
ein zweites Steuerventil (55), welches dazu eingerichtet ist, die Einleitung von Kühlmittel in einen zweiten Kühlmittelkreislauf zu steuern, wobei das zweite Steuerventil (55) einen Drehaktuator umfasst, und/oder wobei das zweite Steuerventil (55) an einer dem ersten Steuerventil (50) gegenüberliegenden Seite eines Vorrichtungselements des Kühlmittelführungssystems angeordnet ist.

## Claims

1. A coolant routing system (100, 200, 300) for a motor vehicle with a plurality of coolant circuits comprising
a coolant tank (10) with an inner chamber designed to store a coolant,
a plurality of coolant channels (40) designed to feed the coolant from the coolant tank into at least two coolant circuits
with at least one of the coolant channels being formed by a channel wall arranged at least partially on an outer wall of the coolant tank and designed to guide the coolant at least in sections along a contour of the outer wall of the coolant tank,
**characterized in that**
at least one first control valve (50) designed to control the inlet of coolant into at least two coolant circuits, said first control valve having at least two valve sections (51, 52) that are fixed relative to one another, each of which is designed to control the inlet of coolant into one of the plurality of coolant circuits and which are each designed to be moved together with one another,
where the first control valve (50) is arranged at least partially in two different coolant channels (40).

2. A coolant routing system (100, 200, 300) according to the preceding claim in which at least one part of the channel wall of the at least one coolant channel (40) and at least one part of the outer wall of the coolant tank are formed integrally with one another.

3. A coolant routing system (100, 200, 300) according to one of the preceding claims in which the coolant tank is formed by two tank components (20, 30) arranged next to one another that together enclose the inner chamber except for openings for the coolant channels (40) and/or openings for a coolant supply.

4. A coolant routing system (100, 200, 300) according to the preceding claim in which the two tank components (20, 30) arranged next to one another further form, in cooperation, at least a part of one of the plurality of coolant channels (40).

5. A coolant routing system (100, 200, 300) according to one of the preceding claims in which the inner chamber of the coolant tank (10) is free of pipes and/or free of valves, pumps or control devices.

6. A coolant routing system (100, 200, 300) according to one of the preceding claims in which the first control valve (50) comprises a rotary actuator.

7. A coolant routing system (100, 200, 300) according to one of the preceding claims in which the first control valve (50) is designed as part of a coolant distributor assembly (400) that is manufactured separately from the coolant tank (10) and that is in particular arranged detachably on the plurality of coolant channels (40).

8. A coolant routing system (100, 200, 300) according to one of the preceding claims further encompassing a second control valve (55) designed to control the inlet of coolant into a second coolant circuit, said second control valve (55) comprising a rotary actuator, and/or in which the second control valve (55) is arranged on a side of a device element of the coolant routing system opposite the first control valve (50).

## Revendications

1. Un système de conduites de fluide de refroidissement (100, 200, 300) pour un véhicule automobile avec plusieurs circuits de fluide de refroidissement, comprenant un réservoir de fluide de refroidissement (10) avec un intérieur adapté pour stocker un fluide de refroidissement,
plusieurs conduits de fluide de refroidissement (40) adaptés pour guider le fluide de refroidissement du réservoir de fluide de refroidissement dans au moins deux circuits de fluide de refroidissement, au moins un des conduits de fluide de refroidissement étant constitué d'une paroi de conduit disposée au moins partiellement sur une paroi extérieure du réservoir de fluide de refroidissement et adaptée pour guider le fluide de refroidissement au moins en partie en suivant un contour de la paroi extérieure du réservoir de fluide de refroidissement,
**caractérisé en ce que**
au moins une première valve de commande (50) conçue pour commander l'introduction de fluide de refroidissement dans au moins deux circuits de fluide de refroidissement, la première valve de commande comprenant au moins deux sections de soupape (51, 52) fixes l'une par rapport à l'autre chacune conçue pour commander l'introduction de fluide de refroidissement dans l'un des circuits de fluide de refroidissement et chacune conçue pour être déplacées ensemble,
où la première valve de commande (50) est disposée au moins partiellement dans deux conduits de fluide de refroidissement (40) différents.

2. Système de conduites de fluide de refroidissement (100, 200, 300) selon la revendication précédente où
au moins une partie de la paroi d'au moins un conduit de fluide de refroidissement (40) et au moins une partie de la paroi extérieure du réservoir de fluide de refroidissement sont formées d'un seul tenant.

3. Système de conduites de fluide de refroidissement (100, 200, 300) selon l'une des revendications précédentes où
le réservoir de fluide de refroidissement est formé par deux composants de réservoir (20, 30) disposés l'un contre l'autre qui englobent l'intérieur du réservoir à l'exception d'ouvertures pour les conduits de fluide de refroidissement (40) et/ou d'ouvertures pour une alimentation en fluide de refroidissement.

4. Système de conduites de fluide de refroidissement (100, 200, 300) selon la revendication précédente où les deux composants de réservoir (20, 30) disposés l'un contre l'autre forment, en outre, par leur interaction au moins une partie d'un des plusieurs conduits de fluide de refroidissement (40).

5. Système de conduites de fluide de refroidissement (100, 200, 300) selon l'une des revendications précédentes où l'intérieur du réservoir de fluide de refroidissement (10) est exempt de conduites et/ou de valves, pompes ou dispositifs de commande.

6. Système de conduites de fluide de refroidissement (100, 200, 300) selon l'une des revendications précédentes où la première valve de commande (50) comprend un actionneur rotatif.

7. Système de conduites de fluide de refroidissement (100, 200, 300) selon l'une des revendications précédentes où la première valve de commande (50) est réalisée en tant que partie d'un ensemble de distribution de fluide de refroidissement (400) fabriqué séparément du réservoir de fluide de refroidissement (10) et notamment disposé de manière amovible sur les conduits de fluide de refroidissement (40).

8. Système de conduites de fluide de refroidissement (100, 200, 300) selon l'une des revendications précédentes comprenant en outre une deuxième valve de commande (55) conçues pour commander l'introduction de fluide de refroidissement dans un deuxième circuit de fluide de refroidissement, la deuxième valve de commande (55) comprenant un actionneur rotatif et/ou la deuxième valve de commande (55) étant disposée sur un côté opposé à la première valve de commande (50) d'un élément du dispositif du système de conduites de fluide de refroidissement.
